# EUROPÄISCHE PATENTSCHRIFT

(11) **EP 2 718 919 B1**
(45) Veröffentlichungstag und Bekanntmachung des Hinweises auf die Patenterteilung: **05.04.2017**
(21) Anmeldenummer: 12729397.5
(22) Anmeldetag: 04.06.2012
(51) Int. Cl.: G08G 1/16, B60Q 1/52

(54) **VORRICHTUNG UND VERFAHREN ZUM WARNEN EINES FAHRERS EINES KRAFTFAHRZEUGS**
DEVICE AND METHOD FOR WARNING A DRIVER OF A MOTOR VEHICLE
DISPOSITIF ET PROCÉDÉ D'AVERTISSEMENT D'UN CONDUCTEUR D'UN VÉHICULE AUTOMOBILE

(30) Priorität: 10.06.2011 DE 102011077384
(43) Veröffentlichungstag der Anmeldung: 16.04.2014
(73) Patentinhaber: Robert Bosch GmbH, 70442 Stuttgart (DE)
(72) Erfinder: DE SCISCIO, Andrea, I-10064 Cantalupa (IT); SCHNEIDER, Marcus, 71642 Ludwigsburg (DE)
(86) Internationale Anmeldenummer: PCT/EP2012/060506
(87) Internationale Veröffentlichungsnummer: WO 2012/168187

(56) Entgegenhaltungen:
- WO-A1-01/45067
- DE-A1-102006 047 634
- US-A1- 2002 011 926

## Beschreibung

### Stand der Technik

Die Erfindung geht aus von einem Verfahren zum Warnen eines Fahrers eines Kraftfahrzeugs mittels eines optischen und/oder akustischen Warnsignals. Die Erfindung betrifft ferner eine Vorrichtung zur Durchführung des Verfahrens.

US 2002/011926 A1 offenbart eine Vorrichtung zur Erkennung von Objekten, die während der Fahrt in den Bereich des toten Winkels eines Fahrzeugs eindringen. Die Vorrichtung nutzt hierzu im Wesentlichen ein System von Sendern, die ein kreisförmig polarisiertes Signal aussenden, und Empfängern, die das Echo dieses Signales empfangen. Wird ein Blinker betätigt und im zugehörigen toten Winkel des Fahrzeugs ein anderes Fahrzeug detektiert, wird ein Warnsignal am Seitenspiegel und/oder Innenspiegel ausgelöst. Überholt ein Fahrzeug mit der Vorrichtung ein anderes Fahrzeug und blinkt dabei, so wird eine Warnung ausgelöst, sobald das überholte Fahrzeug in den toten Winkel eintritt.

US 2006/0006988 A1 offenbart ein Warnanzeigesystem, das mittels einer Leuchtanzeige Fahrer vor Objekten im toten Winkel eines Fahrzeugs warnt. Das Warnanzeigesystem ist mit einem Sensorsystem verbunden, das dem Warnanzeigesystem Objekte in einem Überwachungsbereich meldet. Mittels einer Spurwechselerkennungsroutine erkennt das Warnanzeigesystem, ob ein Spurwechsel des Fahrzeugs zu erwarten ist. Das Sensorsystem und die Spurwechselerkennungsroutine geben ihre Resultate an das Warnanzeigesystem als Eingabewerte weiter. Das Warnanzeigesystem berechnet aus diesen Eingabewerten Parameter, beispielsweise Leuchtintensitätswerte, mit denen die Leuchtanzeige angesteuert wird, und so ein angepasstes Warnsignal an den Fahrer zu erzeugen.

Nachteilig an Warnsystemen gemäß dem Stand der Technik ist, dass in verschiedenen Verkehrssituationen Warnungen ausgelöst werden, die vom Fahrer eines Kraftfahrzeugs als falsch oder störend wahrgenommen werden können. Überholt beispielsweise ein Fahrer ein anderes Kraftfahrzeug, und wird bei Eintritt des überholten Kraftfahrzeugs in den toten Winkel gewarnt, so wird diese Warnung als überflüssig wahrgenommen. Ferner lenkt ein Warnsignal während eines Überholvorgangs den Fahrer ab und ist somit der Verkehrssicherheit abträglich. Werden Warnsignale hingegen mit einer Verzögerung ausgelöst, so hat der Fahrer in kritischen Verkehrssituationen, beispielsweise beim Spurwechsel, eine verkürzte Reaktionszeit. Fahrer neigen dazu, eine verzögert übermittelte Warnung als Funktionsstörung der Warnvorrichtung einzuordnen und gewöhnen sich daran, die vermeintlich unzuverlässige Warnvorrichtung zu ignorieren. Dadurch wird die verkehrssicherheitssteigernde Wirkung von Warnsystemen herabgesetzt.

### Offenbarung der Erfindung

Das erfindungsgemäße Verfahren zum Warnen eines Fahrers eines Kraftfahrzeugs mittels eines optischen und/oder akustischen Warnsignals umfassend folgende Schritte:
a) Detektieren eines Objekts mit einem Sensor, der ein entgegen der Fahrtrichtung des Kraftfahrzeugs geöffnetes Winkelfeld erfasst und der einer Seite des Kraftfahrzeugs zugeordnet ist,
b) Erfassen mindestens eines fahrtrichtungsrelevanten Parameters mittels einer Steuereinheit,
c) Ermittlung, ob eine ein unmittelbares Warnsignal gebietende Verkehrssituation vorliegt, mittels eines Entscheidungsalgorithmus, der den mindestens einen fahrtrichtungsrelevanten Parameter als Eingabe verarbeitet,
d) Auslösen eines unmittelbaren Warnsignals, wenn eine ein unmittelbares Warnsignal gebietende Verkehrssituation vorliegt oder Ermitteln einer der Verkehrssituation angepassten Verzögerungsdauer und Auslösen des Warnsignal mit der ermittelten Verzögerungsdauer, wenn keine ein unmittelbares Warnsignal gebietende Verkehrssituation vorliegt.

Das erfindungsgemäße Verfahren erlaubt es, die vorliegende Verkehrssituation zu erkennen und dadurch zu entscheiden, ob der Fahrer gewarnt werden soll. Wird der Fahrer gewarnt, wird ferner entschieden, mit welcher Verzögerung das Warnsignal gegeben wird. Dem Fahrer werden somit nur Warnungen gegeben, die für relevant erachtet werden. Die abgegebenen Warnsignale an den Fahrer werden als relevant eingestuft, so dass der Fahrer sich nicht daran gewöhnt, das Warnsystem wegen vermeintlicher Fehlerhaftigkeit zu ignorieren. Die verkehrssicherheitsteigernde Wirkung von Warnsystemen wird durch das erfindungsgemäße Verfahren erhöht.

In einer Ausführungsform der Erfindung kann als fahrtrichtungsrelevanter Parameter ein Aktivitätssignal eines Fahrtrichtungsanzeigers des Kraftfahrzeugs, im Allgemeinen Blinker genannt, herangezogen werden. In einer anderen Ausführungsform der Erfindung kann ein Ausschlagwinkel eines Lenkrads des Kraftfahrzeugs als fahrtrichtungsrelevanter Parameter genutzt werden. Da ein Blinker per se dem Anzeigen einer Absicht zur Fahrtrichtungsänderung dient, ist dessen Aktivitätssignal ein fahrtrichtungsrelevanter Parameter, dessen Auswertung keiner weiteren Analyse bedarf. Ferner ist das Detektieren eines Aktivitätssignals eines Blinkers einfach zu realisieren, und stellt unter dem Kostenaspekt eine vorteilhafte Ausführungsform dar. Genauso ist der Ausschlagwinkel eines Lenkrads einfach zu erfassen, und ist stets mit einer Änderung der Fahrtrichtung zwangsgekoppelt. Die Nutzung des Ausschlagwinkels des Lenkrads stellt eine einfach und kostengünstig zu realisierende Ausführungsform dar.

Ferner kann der Entscheidungsalgorithmus einen Regelkreis umfassen, mittels dessen für eine erfasste Verkehrssituation kontinuierlich veränderliche Verzögerungsdauern ermittelt werden können. Regelkreise sind mittels einfacher elektronischer Komponenten realisierbar und stellen eine robuste technische Lösung dar. Ferner können Regelkreise derart ausgebildet werden, dass ein kontinuierlich sich ändernder Eingabewert einen kontinuierlich sich ändernden Ausgabewert erzeugt. Der Einsatz eines Regelkreises erlaubt, das erfindungsgemäße Verfahren in puncto Verzögerungsdauer exakt an Vorgaben, die z.B. von Sicherheitsüberlegungen oder Komfortwünschen herrühren können, anzupassen.

In einer weiteren Ausführungsform der Erfindung umfasst der Entscheidungsalgorithmus eine Tabelle. Anhand der Tabelle können diskret veränderliche Verzögerungsdauern bewirkt werden. Wird die Tabelle in Form eines Datenspeichers im Warnsystem implementiert, so ist eine nachträgliche Veränderung der darin gespeicherten Werte möglich. Dadurch werden Veränderungen am Warnverfahren möglich, beispielsweise können gewonnene Erfahrungen zur Verbesserung des Warnsystems eingearbeitet werden. Die Möglichkeit zur nachträglichen Veränderung verlängert den Produkt-Lebenszyklus.
In einer Ausführungsform der Erfindung wird auf einer Seite des Kraftfahrzeugs ein Objekt erfasst. Das Objekt überholt hierbei das Kraftfahrzeug und wird im toten Winkel des Kraftfahrzeugs erfasst. Bei aktiviertem Blinker auf der gleichen Seite, auf der das Objekt erfasst ist, wird hierbei eine Verzögerung des Warnsignals unterdrückt. Beabsichtigt ein Fahrer, beispielsweise nach rechts abzubiegen (bei Linksverkehr entsprechend umgekehrt), oder auf eine andere Fahrspur zu wechseln stellt ein herannahendes anderes Kraftfahrzeug im toten Winkel eine Gefährdung dar. Eine unmittelbare Warnung an den Fahrer ist in solch einer Verkehrssituation unerlässlich. Das erfindungsgemäße Verfahren erkennt diese kritische Verkehrssituation und gewährleistet eine situationsgerechte unmittelbare Warnung an den Fahrer.

In einer weiteren Ausführungsform des erfindungsgemäßen Verfahrens wird auf einer Seite des Kraftfahrzeugs ein Objekt erfasst. Das Objekt wird hierbei vom Kraftfahrzeug überholt und wird im toten Winkel des Kraftfahrzeugs erfasst. Bei gleichzeitig deaktiviertem Blinker auf der gleichen Seite, auf der das Objekt erfasst wird, wird eine hohe Verzögerung des Warnsignals bewirkt. Beim Überholen eines anderen Kraftfahrzeugs befindet sich zwar das überholte Fahrzeug im toten Winkel des überholenden Fahrzeugs. Der Fahrer ist sich des überholten Fahrzeugs in dieser Situation bewusst, und eine Warnung lenkt den Fahrer in dieser Situation nur vom Verkehrsgeschehen ab. Das erfindungsgemäße Verfahren erkennt daran, dass der Blinker auf der Seite, auf der sich das überholte Kraftfahrzeug befindet, inaktiv ist, dass eine unkritische Verkehrssituation vorliegt. Das erfindungsgemäße Verfahren vermeidet in einer unkritischen Situation eine Ablenkung des Fahrers. Durch die hohe Verzögerung, mit der das Warnsignal ausgelöst wird, erhält der Fahrer zusätzlich eine Rückmeldung, der er entnimmt, dass das Warnsystem funktioniert und das überholte Fahrzeug erkannt hat. Dadurch wird dem Fahrer die Funktionstüchtigkeit des Warnsystems versichert, und verhindert, dass der Fahrer dieses als fehlerhaft einstuft und sich daran gewöhnt, das Warnsystem zu ignorieren.

Ferner kann das erfindungsgemäße Verfahren ein Erfassen des einen Objekts im toten Winkel auf einer Seite des Kraftfahrzeugs umfassen. Das Objekt wird dabei vom Kraftfahrzeug überholt. Bei gleichzeitig aktiviertem Blinker auf der gleichen Seite des Kraftfahrzeugs, auf der das Objekt erfasst wird, wird eine reduzierte Verzögerungsdauer bewirkt. In Verkehrssituationen, wie beispielsweise beim Abschließen eines Überholmanövers, wird dadurch dem Fahrer eine Warnung vor einer potentiellen Gefahr, dem anderen Kraftfahrzeug, gegeben. Gleichzeitig wird durch das verzögerte Warnsignal eine unmittelbare Ablenkung des Fahrers vermieden, die in einer solchen Situation eine größere Gefährdung darstellt. In derartigen Verkehrssituationen stellt das erfindungsgemäße Verfahren eine Warnung erst dann zur Verfügung, wenn diese selbst keine Gefährdung mehr erzeugen kann. Ferner wird der Fahrer daran gewöhnt, dass Warnsignale stets zu einem angemessenen Zeitpunkt ausgegeben werden. Dadurch wird der Fahrer an eine höhere Akzeptanz des Warnsystems herangeführt. Die verkehrssicherheitssteigernde Wirkung des Warnsystems wird dadurch verbessert.

In einer Ausführungsform der Erfindung werden beim Ermitteln der Verzögerungsdauer mittels eines Entscheidungsalgorithmus mehrere fahrtrichtungsrelevante Parameter gleichzeitig verarbeitet. Der Gebrauch mehrerer fahrtrichtungsrelevanter Parameter erlaubt eine differenzierte Beurteilung der Verkehrssituation durch den Entscheidungsalgorithmus. Neben einfachen Verkehrssituationen, die beispielsweise mittels eines fahrtrichtungsrelevanten Parameters analysiert werden können, erlaubt die Auswertung mehrerer Parameter gleichzeitig auch in untypischen Verkehrssituationen ein effizientes Warnen des Fahrers zu gewährleisten. Werden beispielsweise das Aktivitätssignal der Blinker und der Ausschlagwinkel des Lenkrads ausgewertet, so kann ein Vorrang des Ausschlagwinkels des Lenkrads vor dem Aktivitätssignal des Blinkers vorgesehen sein. Beispielsweise ist es so möglich, bei einem Spurwechsel, bei dem kein Blinker aktiviert ist, ein Warnsignal an den Fahrer zu geben.

Die Erfindung betrifft ferner eine Vorrichtung zur Ausführung des erfindungsgemäßen Verfahrens, die eine Sensorik umfasst, die mindestens einen ersten Sensor umfasst, der an der Außenseite des Kraftfahrzeugs angebracht ist. Der Sensor ist dabei einer Seite des Kraftfahrzeugs zugeordnet, um einen winkelförmigen Bereich zu überwachen und den Eintritt von Objekten in den winkelförmigen Bereich zu detektieren. Ferner weist die Vorrichtung eine Steuereinheit auf, die mit dem mindestens einen ersten Sensor verbunden ist, um Werte von fahrtrichtungsrelevanten Parametern des Kraftfahrzeugs weiterzugeben. Die Vorrichtung umfasst eine Warneinheit zur Ausgabe optischer und/oder akustischer Warnsignale. Dabei ist die Warneinheit dahingehend ausgebildet, ein Warnsignal mit einer Verzögerung zu geben, wobei die Dauer der Verzögerung von einem Auswertungsergebnis eines Entscheidungsalgorithmus wenigstens eines fahrtrichtungsrelevanten Parameters abhängig ist.

Kurze Beschreibung der Zeichnungen
- Fig. 1:: Schematische Darstellung eines überholenden Kraftfahrzeugs mit bekanntem Toter-Winkel-Warnsystem und dessen Betriebsverfahren
- Fig. 2:: Schematische Darstellung eines überholten Kraftfahrzeugs mit bekanntem Toter-Winkel-Warnsystem und dessen Betriebsverfahren
- Fig. 3:: Ablaufschema des erfindungsgemäßen Verfahrens in qualitativem Vergleich zu bekannten Betriebsverfahren für Toter-Winkel-Warnsysteme

### Ausführungsformen der Erfindung

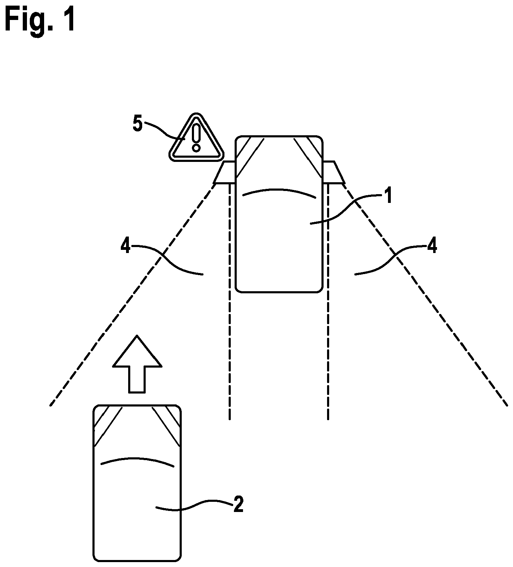

In Figur 1 ist ein Toter-Winkel-Warnsystem und sein Betriebsverfahren gemäß dem Stand der Technik schematisch abgebildet. Ein Kraftfahrzeug 1 wird von einem zweiten Kraftfahrzeug 2 überholt. Das erste Kraftfahrzeug 1 weist hierbei eine Sensorik auf, die einen winkelförmigen Bereich 4 erfasst, der entgegen der Fahrtrichtung geöffnet ist, auf. Die Sensorik ist symmetrisch auf beiden Seiten des ersten Kraftfahrzeugs 1 angebracht, so dass zwei winkelförmige Bereiche 4 erfasst werden. Tritt das zweite Kraftfahrzeug 2 in den erfassten winkelförmigen Bereich ein, wird ein Warnsignal 5 an den Fahrer, in diesem Fall mittels einer optischen Warnung im Bereich des Außenspiegels ausgegeben und so vor dem zweiten Kraftfahrzeug gewarnt.

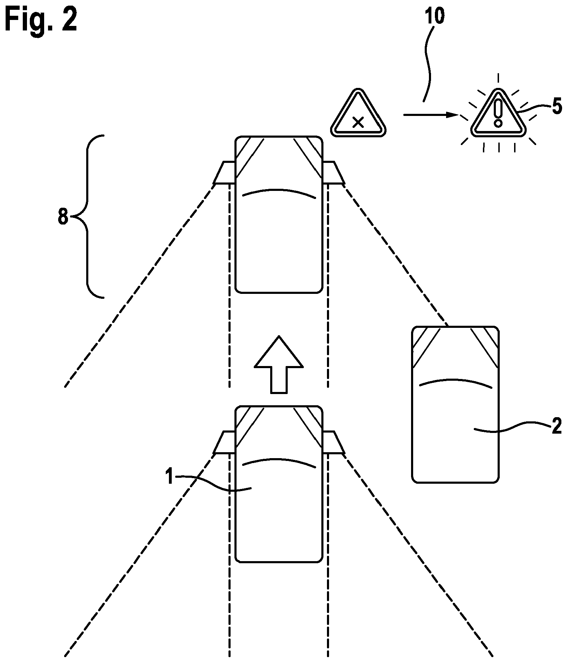

In Figur 2 ist ein Toter-Winkel-Warnsystem und sein Betriebsverfahren gemäß dem Stand der Technik schematisch abgebildet. Ein erstes Kraftfahrzeug 1 überholt hierbei ein zweites Kraftfahrzeug 2. Eine Sensorik erfasst winkelförmige Bereiche, die jeweils ein entgegen der Fahrtrichtung geöffnetes Winkelfeld aufweisen. Ferner ist die Sensorik symmetrisch auf beiden Seiten des ersten Kraftfahrzeugs angeordnet. In Laufe des Überholvorgangs, bei dem das erste Kraftfahrzeug 1 am zweiten Kraftfahrzeug 2 vorbeifährt, tritt das zweite Kraftfahrzeug in einen erfassten winkelförmigen Bereich der Sensorik ein. Das zweite Kraftfahrzeug 2 wird hierbei detektiert und die zugehörige Information an eine hier nicht abgebildete Steuereinheit weitergegeben. Die Steuereinheit ermittelt aus der Information eine Verzögerungsdauer 10 von ca. 1 Sekunde. Ist die Verzögerungsdauer 10 verstrichen, wird ein Warnsignal 5 an den Fahrer ausgelöst. Während der Verzögerungsdauer 10 legt das erste Kraftfahrzeug 1 relativ zum zweiten Kraftfahrzeug 2 eine Strecke zurück, so dass das Warnsignal 5 an den Fahrer des ersten Fahrzeugs 1 ausgelöst wird, wenn das zweite Kraftfahrzeug 2 bereits im Wesentlichen passiert wurde. Das erste Kraftfahrzeug 1 befindet sich danach an einer in Bezug auf das zweite Fahrzeug versetzten Position 8.

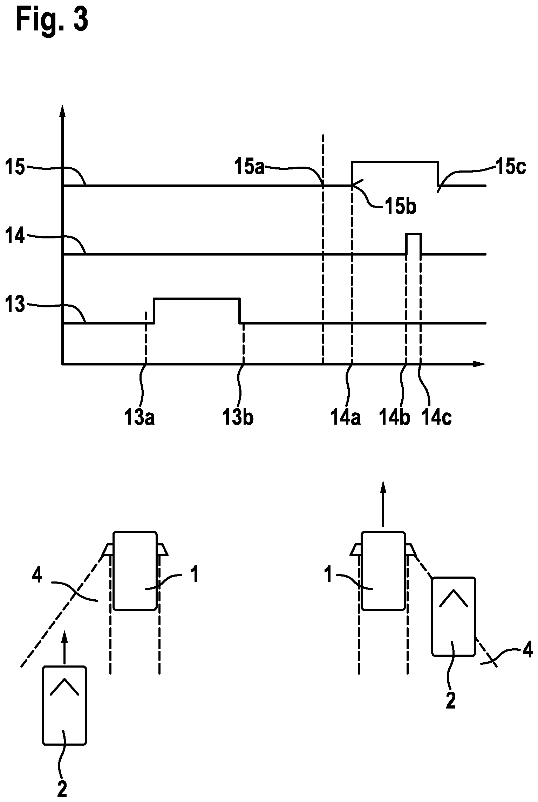

In Figur 3 ist ein Ablaufschema des erfindungsgemäßen Verfahrens in Form eines Graphen dargestellt mit Vergleich zu den Betriebsverfahren der Toter-Winkel-Warnsysteme aus dem Stand der Technik, wie in Figur 1 und 2 dargestellt. Hierbei ist die horizontale Achse eine Zeitachse und die vertikale Achse eine Aktivitätsachse. Hierbei stellt ein vertikaler Sprung der Kurve nach oben eine Aktivierung, ein vertikaler Sprung nach unten eine Deaktivierung des Warnsignals 5 an den Fahrer dar.

In einer ersten Kurve 13 wird die Aktivität des Warnsignals 5 während eines vollständigen Überholmanövers gemäß Figur 1 dargestellt. Das Überholmanöver umfasst hierbei drei Zeitabschnitte. In einem ersten Zeitabschnitt, im Graphen der Bereich zwischen der vertikalen Achse und Überholstartpunkt 13a, befindet sich das zweite Kraftfahrzeug 2 außerhalb des winkelförmigen Bereichs 4, den die Sensorik des ersten Kraftfahrzeugs 1 erfasst. Während dieses Zeitabschnitts ist das Warnsignal 5 deaktiviert. Bei Erreichen des Überholstartpunkts 13a tritt das zweite Kraftfahrzeug 2 in den erfassten winkelförmigen Bereich 4 des ersten Kraftfahrzeugs 1 ein. Gemäß dem in Fig. 1 dargestellten Betriebsverfahren eines Toter-Winkel-Warnsystems wird im Wesentlichen unmittelbar auf diesen Eintritt das Warnsignal 5 an den Fahrer aktiviert, wie anhand des vertikalen Sprungs nach oben im Graphen dargestellt.

In einem zweiten Zeitabschnitt, der zwischen den Überholstartpunkt 13a und einem Überholendendpunkt 13b liegt, bleibt das Warnsignal 5 an den Fahrer aktiviert. Im Überholendpunkt 13b verlässt das zweite Kraftfahrzeug 2 den erfassten Bereich 4 des ersten Kraftfahrzeugs 1. Dadurch wird im Überholendpunkt 13b das Warnsignal 5 an den Fahrer deaktiviert. Im sich anschließenden dritten Zeitabschnitt befindet sich das zweite Kraftfahrzeug 2 außerhalb des erfassten Bereichs 4 des ersten Kraftfahrzeugs 1 und das Überholmanöver ist beendet. Im Überholvorgang nach Kurve 13 befinden sich die beiden Kraftfahrzeuge 1, 2 nach dem Eintritt des zweiten Kraftfahrzeugs 2 in dem toten Winkel des ersten Kraftfahrzeugs 1 nah beieinander, wodurch ein Spurwechsel durch das erste Fahrzeug eine Gefahrensituation erzeugen würde, vor der der Fahrer des ersten Kraftfahrzeugs 1 gewarnt werden soll. Für höchstmögliche Verkehrssicherheit ist eine verzögerungsfreie Warnung des Fahrers des ersten Fahrzeugs 1 geboten.

In einer zweiten Kurve 14 wird die Aktivität des Warnsignals 5 während eines vollständigen Überholmanövers gemäß Figur 2 dargestellt. Das Überholmanöver umfasst hierbei im Wesentlichen vier Zeitabschnitte. In einem ersten Zeitabschnitt, im Graphen der Bereich zwischen der vertikalen Achse und dem Überholstartpunkt 14a, befindet sich das zweite Kraftfahrzeug 2 außerhalb des von der Sensorik des ersten Kraftfahrzeugs 1 erfassten winkelförmigen Bereichs 4. Das Warnsignal 5 an den Fahrer ist dabei deaktiviert. Im Überholstartpunk 14a tritt das zweite Kraftfahrzeug 2 in den erfassten winkelförmigen Bereich 4 des ersten Kraftfahrzeugs 1 ein und wird erfasst. Der Erfassung im Überholstartpunkt 14a schließt sich ein zweiter Zeitabschnitt, der zwischen dem Überholstartpunkt 14a und einem Warnstartpunkt 14b liegt, an. Während des zweiten Zeitabschnitts bleibt das Warnsignal 5 an den Fahrer deaktiviert, wobei der zweite Zeitabschnitt mit der Verzögerungsdauer 10 gemäß Figur 2 korrespondiert. Bei Eintritt des Warnstartpunkts 14b wird das Warnsignal 5 an den Fahrer aktiviert. Darauf folgt ein dritter Zeitabschnitt, der zwischen dem Warnstartpunkt 14b und dem Manöverendpunkt 14c liegt, und während dessen das Warnsignal 5 an den Fahrer aktiviert bleibt. Bei Eintritt des Manöverendpunkts 14c verlässt das zweite Kraftfahrzeug 2 den erfassten winkelförmigen Bereich 4 des ersten Kraftfahrzeugs 1 und das Warnsignal 5 an den Fahrer wird deaktiviert. Im folgenden vierten Zeitabschnitt befindet sich das zweite Kraftfahrzeug 2 außerhalb des erfassten winkelförmigen Bereichs 4 ersten Kraftfahrzeugs 1 und das Überholmanöver ist beendet. Der Fahrer des ersten Kraftfahrzeugs 1 hat in einem Fahrmanöver nach Kurve 14 das zweite Kraftfahrzeug 2 üblicherweise von Anfang an wahrgenommen. Ferner tritt das zweite Kraftfahrzeug 2 in den toten Winkel des ersten Kraftfahrzeugs 1 ein, wenn die beiden Kraftfahrzeuge 1, 2 sich voneinander entfernen. Dadurch liegt keine Gefahrensituation vor. Der Fahrer des ersten Kraftfahrzeugs 1 wird verzögert gewarnt und wird so zunächst nicht von der Verkehrssituation abgelenkt. Zu einem unkritischen Zeitpunkt wird die Warnung anschließend ausgegeben, um dem Fahrer des ersten Kraftfahrzeugs 1 die Funktionstüchtigkeit der Warnvorrichtung zu versichern.

In einer dritten Kurve 15 ist der Ablauf des erfindungsgemäßen Verfahrens zum Betrieb eines Toter-Winkel-Warnsystems am Beispiel eines Überholmanövers dargestellt. Das Überholmanöver umfasst hierbei im Wesentlichen vier Zeitabschnitte. In einem ersten Zeitabschnitt, der im Bereich zwischen der vertikalen Achse und dem Überholstartpunkt 15a liegt, liegt das zweite Kraftfahrzeug 2 außerhalb des erfassten winkelförmigen Bereichs 4 des ersten Kraftfahrzeugs 1. Das erste Kraftfahrzeug 1 weist eine höhere Geschwindigkeit als das zweite Kraftfahrzeug 2 auf und ein Blinker auf einer Seite des ersten Kraftfahrzeugs ist aktiviert. Im ersten Zeitabschnitt ist das Warnsignal 5 an den Fahrer deaktiviert. Im Überholstartpunkt 15a tritt das zweite Kraftfahrzeug 2 in den erfassten winkelförmigen Bereich 4 des ersten Kraftfahrzeugs 1 ein und wird detektiert. In einem zweiten Zeitabschnitt, der zwischen dem Überholstartpunkt 15a und dem Warnstartpunkt 15b liegt, ist das Warnsignal 5 an den Fahrer weiterhin deaktiviert. Der zweite Zeitabschnitt korrespondiert hierbei mit der Verzögerungsdauer 10. Mit Eintritt des Warnstartpunkts 15b wird das Warnsignal 5 an den Fahrer ausgelöst. In einem dritten Zeitabschnitt, der zwischen dem Warnstartpunkt 15b und einem Manöverendpunkt 15c liegt, bleibt das Warnsignal 5 an den Fahrer aktiviert. Mit Eintritt des Manöverendpunkts 15c wird das Warnsignal 5 deaktiviert. Im auf den Manöverendpunkt 15c folgenden Zeitabschnitt befindet sich das zweite Kraftfahrzeug 2 außerhalb des erfassten winkelförmigen Bereichs 4 des ersten Kraftfahrzeugs 1 und das Überholmanöver ist beendet. Bei einem Fahrmanöver nach Kurve 15 wird antizipiert, dass eine unkritische Verkehrssituation, nämlich das Überholen des zweiten Kraftfahrzeugs 2, kritisch werden kann. Eine kritische Verkehrssituation tritt ein, wenn auf das Überholen des zweiten Kraftfahrzeugs 2 durch das erste Kraftfahrzeug 1 ein Fahrspurwechsel in Richtung des zweiten Kraftfahrzeugs 2 und eventuell eine Verzögerung des ersten Kraftfahrzeugs 1 folgt. Eine Verzögerung des ersten Kraftfahrzeugs 1 kann einem Abbiegemanöver geschuldet sein. Es entsteht eine kritische Verkehrssituation, vor der der Fahrer effektiv gewarnt werden soll. Eine niedrige Verzögerungsdauer erhöht in einer solchen Situation die Verkehrssicherheit.

## Patentansprüche

1. Verfahren zum Warnen eines Fahrers eines Kraftfahrzeugs (1) mittels eines optischen und/oder akustischen Warnsignals (5), umfassend:
a) Detektieren eines Objekts mit einem Sensor, der ein entgegen der Fahrtrichtung des Kraftfahrzeugs (1) geöffnetes Winkelfeld (4) erfasst und der einer Seite des Kraftfahrzeugs (1)zugeordnet ist,
b) Erfassen mindestens eines fahrtrichtungsrelevanten Parameters mittels einer Steuereinheit,
c) Ermittlung, ob eine ein unmittelbares Warnsignal (5) gebietende Verkehrssituation vorliegt, mittels eines Entscheidungsalgorithmus, der den mindestens einen fahrtrichtungsrelevanten Parameter als Eingabe verarbeitet,
**gekennzeichnet durch**
d) Auslösen eines unmittelbaren Warnsignals (5), wenn eine ein unmittelbares Warnsignal (5) gebietende Verkehrssituation vorliegt und andernfalls Ermitteln einer der Verkehrssituation angepassten Verzögerungsdauer (10) und Auslösen des Warnsignal (5) mit der ermittelten Verzögerungsdauer (10), wenn keine ein unmittelbares Warnsignal (5) gebietende Verkehrssituation vorliegt.

2. Verfahren zum Warnen eines Fahrers eines Kraftfahrzeugs (1) nach Anspruch 1, **dadurch gekennzeichnet, dass** der mindestens eine fahrtrichtungsrelevante Parameter ein Aktivitätssignal eines Blinkers des Kraftfahrzeugs (1) ist.

3. Verfahren zum Warnen eines Fahrers eines Kraftfahrzeugs (1) nach einem der Ansprüche 1 oder 2, **dadurch gekennzeichnet, dass** der mindestens eine fahrtrichtungsrelevante Parameter ein Ausschlagwinkel eines Lenkrads des Kraftfahrzeugs (1) ist.

4. Verfahren zum Warnen eines Fahrers eines Kraftfahrzeugs (1) nach einem der Ansprüche 1 bis 3, **dadurch gekennzeichnet, dass** der Entscheidungsalgorithmus einen Regelkreis umfasst, anhand dessen kontinuierlich veränderliche Verzögerungsdauern (10) bewirkt werden.

5. Verfahren zum Warnen eines Fahrers eines Kraftfahrzeugs (1) nach einem der Ansprüche 1 bis 3, **dadurch gekennzeichnet, dass** der Entscheidungsalgorithmus eine Tabelle umfasst, anhand der diskret veränderliche Verzögerungsdauern (10) bewirkt werden.

6. Verfahren zum Warnen eines Fahrers eines Kraftfahrzeugs (1) nach einem der Ansprüche 1 bis 5, **dadurch gekennzeichnet, dass** ein Erfassen eines Objekts, das vom Kraftfahrzeug (1) überholt wird, im toten Winkel auf einer Seite des Kraftfahrzeugs (1) bei gleichzeitig aktiviertem Blinker auf der gleichen Seite des Kraftfahrzeugs eine unterdrückte Verzögerung (10) des Warnsignals (5) bewirkt.7

7. Verfahren zum Warnen eines Fahrers eines Kraftfahrzeugs (1) nach einem der Ansprüche 1 bis 5, **dadurch gekennzeichnet, dass** ein Erfassen eines Objekts, das vom Kraftfahrzeug (1) überholt wird, im toten Winkel auf einer Seite des Kraftfahrzeugs (1) bei gleichzeitig deaktiviertem Blinker auf der gleichen Seite des Kraftfahrzeugs (1) eine hohe Verzögerung (10) des Warnsignals (5) bewirkt.

8. Verfahren zum Warnen eines Fahrers eines Kraftfahrzeugs (1) nach einem der Ansprüche 1 bis 5, **dadurch gekennzeichnet, dass** ein Erfassen eines Objekts, das vom Kraftfahrzeug (1) überholt wird, im toten Winkel auf einer Seite des Kraftfahrzeugs (1) bei gleichzeitig aktiviertem Blinker auf der gleichen Seite des Kraftfahrzeugs (1) eine reduzierte Verzögerung (10) des Warnsignals (5) bewirkt.

9. Verfahren zum Warnen eines Fahrers eines Kraftfahrzeugs nach einem der Ansprüche 1 bis 8, **dadurch gekennzeichnet, dass** das Ermitteln der Verzögerung des Warnsignals (5) anhand des mindestens einen fahrtrichtungsrelevanten Parameters mittels eines Entscheidungsalgorithmus oder einer Tabelle mehrere fahrtrichtungsrelevante Parameter gleichzeitig verarbeiten kann.

10. Toter-Winkel-Warnsystem für Kraftfahrzeuge (1), umfassend
- eine Sensorik, die mindestens einen ersten Sensor an der Außenseite des Kraftfahrzeugs (1) umfasst und einer Seite des Kraftfahrzeugs (1) zugeordnet ist, um einen winkelförmigen Bereich (4) außerhalb des Kraftfahrzeugs (1) zu überwachen, und den Eintritt von Objekten in den winkelförmigen Bereich (4) zu detektieren,
- eine Steuereinheit zum Erfassen und Weitergeben eines fahrtrichtungsrelevanten Parameters des Kraftfahrzeugs (1),
- Mittel zur Ermittlung, ob eine ein unmittelbares Warnsignal gebietende Verkehrssituation vorliegt, mittels eines Entscheidungsalgorithmus, der den mindestens einen fahrtrichtungsrelevanten Parameter als Eingabe verarbeitet,
- eine Warneinheit zur Ausgabe einer optischen und/oder akustischen Warnung
**dadurch gekennzeichnet, dass**
- die Warneinheit ausgebildet ist, ein unmittelbares Warnsignal (5) auszulösen, wenn eine ein unmittelbares Warnsignal (5) gebietende Verkehrssituation vorliegt und andernfalls eine der Verkehrssituation angepassten Verzögerungsdauer (10) zu ermitteln und das Warnsignal (5) mit der ermittelten Verzögerungsdauer (10) auszulösen, wenn keine ein unmittelbares Warnsignal (5) gebietende Verkehrssituation vorliegt.

## Claims

1. Method for warning a driver of a motor vehicle (1) by means of an optical and/or acoustic warning signal (5), comprising:
a) detecting an object using a sensor which captures an angular area (4) open contrary to the direction of travel of the motor vehicle (1) and is assigned to one side of the motor vehicle (1),
b) capturing at least one parameter relevant to the direction of travel by means of a control unit,
c) determining whether a traffic situation which demands an immediate warning signal (5) is present by means of a decision algorithm which processes the at least one parameter relevant to the direction of travel as an input,
**characterized by**
d) triggering an immediate warning signal (5) if a traffic situation which demands an immediate warning signal (5) is present and otherwise determining a delay period (10) adapted to the traffic situation and triggering the warning signal (5) with the determined delay period (10) if a traffic situation which demands an immediate warning signal (5) is not present.

2. Method for warning a driver of a motor vehicle (1) according to Claim 1, **characterized in that** the at least one parameter relevant to the direction of travel is an activity signal of an indicator of the motor vehicle (1).

3. Method for warning a driver of a motor vehicle (1) according to either of Claims 1 and 2, **characterized in that** the at least one parameter relevant to the direction of travel is a deflection angle of a steering wheel of the motor vehicle (1).

4. Method for warning a driver of a motor vehicle (1) according to one of Claims 1 to 3, **characterized in that** the decision algorithm comprises a control loop which is used to cause continuously variable delay periods (10).

5. Method for warning a driver of a motor vehicle (1) according to one of Claims 1 to 3, **characterized in that** the decision algorithm comprises a table which is used to cause discretely variable delay periods (10).

6. Method for warning a driver of a motor vehicle (1) according to one of Claims 1 to 5, **characterized in that** detection of an object, which is overtaken by the motor vehicle (1), in the blind spot on one side of the motor vehicle (1) with a simultaneously activated indicator on the same side of the motor vehicle causes a suppressed delay (10) of the warning signal (5).

7. Method for warning a driver of a motor vehicle (1) according to one of Claims 1 to 5, **characterized in that** detection of an object, which is overtaken by the motor vehicle (1), in the blind spot on one side of the motor vehicle (1) with a simultaneously deactivated indicator on the same side of the motor vehicle (1) causes a long delay (10) of the warning signal (5).

8. Method for warning a driver of a motor vehicle (1) according to one of Claims 1 to 5, **characterized in that** detection of an object, which is overtaken by the motor vehicle (1), in the blind spot on one side of the motor vehicle (1) with a simultaneously activated indicator on the same side of the motor vehicle (1) causes a reduced delay (10) of the warning signal (5).

9. Method for warning a driver of a motor vehicle according to one of Claims 1 to 8, **characterized in that** the determination of the delay of the warning signal (5) using the at least one parameter relevant to the direction of travel by means of a decision algorithm or a table can simultaneously process a plurality of parameters relevant to the direction of travel.

10. Blind spot warning system for motor vehicles (1), comprising
- a sensor system which comprises at least one first sensor on the outside of the motor vehicle (1) and is assigned to one side of the motor vehicle (1) in order to monitor an angular area (4) outside the motor vehicle (1) and to detect the entry of objects into the angular area (4),
- a control unit for capturing and forwarding a parameter of the motor vehicle (1) relevant to the direction of travel,
- means for determining whether a traffic situation which demands an immediate warning signal is present by means of a decision algorithm which processes the at least one parameter relevant to the direction of travel as an input,
- a warning unit for outputting an optical and/or acoustic warning,
**characterized in that**
- the warning unit is designed to trigger an immediate warning signal (5) if a traffic situation which demands an immediate warning signal (5) is present and otherwise to determine a delay period (10) adapted to the traffic situation and to trigger the warning signal (5) with the determined delay period (10) if a traffic situation which demands an immediate warning signal (5) is not present.

## Revendications

1. Procédé pour avertir un conducteur d'un véhicule automobile (1) au moyen d'un signal d'avertissement (5) visuel et/ou sonore, comprenant :
a) détection d'un objet avec un capteur qui balaye un champ angulaire (4) ouvert en sens opposé au déplacement du véhicule automobile (1) et qui est associé à un côté du véhicule automobile (1),
b) acquisition d'au moins un paramètre relatif au sens de déplacement au moyen d'une unité de commande,
c) détermination s'il y a présence d'une situation de trafic imposant un signal d'avertissement (5) immédiat, au moyen d'un algorithme de décision qui traite l'au moins un paramètre relatif au sens de déplacement en tant qu'entrée,
**caractérisé par**
d) déclenchement d'un signal d'avertissement (5) immédiat lorsqu'il y a présence d'une situation de trafic imposant un signal d'avertissement (5) immédiat et, le cas contraire, détermination d'une durée de retard (10) adaptée à la situation de trafic et déclenchement du signal d'avertissement (5) avec la durée de retard (10) déterminée lorsqu'il n'y a présence d'aucune situation de trafic imposant un signal d'avertissement (5) immédiat.

2. Procédé pour avertir un conducteur d'un véhicule automobile (1) selon la revendication 1, **caractérisé en ce que** l'au moins un paramètre relatif au sens de déplacement est un signal d'activité d'un clignotant du véhicule automobile (1).

3. Procédé pour avertir un conducteur d'un véhicule automobile (1) selon l'une des revendications 1 ou 2, **caractérisé en ce que** l'au moins un paramètre relatif au sens de déplacement est un angle de braquage d'un volant de direction du véhicule automobile (1).

4. Procédé pour avertir un conducteur d'un véhicule automobile (1) selon l'une des revendications 1 à 3, **caractérisé en ce que** l'algorithme de décision comprend un circuit de régulation au moyen duquel sont produites des durées de retard (10) à variation continue.

5. Procédé pour avertir un conducteur d'un véhicule automobile (1) selon l'une des revendications 1 à 3, **caractérisé en ce que** l'algorithme de décision comprend un tableau au moyen duquel sont produites les durées de retard (10) à variation discrète.

6. Procédé pour avertir un conducteur d'un véhicule automobile (1) selon l'une des revendications 1 à 5, **caractérisé en ce qu'**une détection d'un objet qui est dépassé par le véhicule automobile (1), dans l'angle mort d'un côté du véhicule automobile (1) avec le clignotant simultanément activé sur le même côté du véhicule automobile, produit un retard (10) inhibé du signal d'avertissement (5).

7. Procédé pour avertir un conducteur d'un véhicule automobile (1) selon l'une des revendications 1 à 5, **caractérisé en ce qu'**une détection d'un objet qui est dépassé par le véhicule automobile (1), dans l'angle mort d'un côté du véhicule automobile (1) avec le clignotant simultanément désactivé sur le même côté du véhicule automobile (1), produit un retard (10) élevé du signal d'avertissement (5).

8. Procédé pour avertir un conducteur d'un véhicule automobile (1) selon l'une des revendications 1 à 5, **caractérisé en ce qu'**une détection d'un objet qui est dépassé par le véhicule automobile (1), dans l'angle mort d'un côté du véhicule automobile (1) avec le clignotant simultanément activé sur le même côté du véhicule automobile (1), produit un retard (10) réduit du signal d'avertissement (5).

9. Procédé pour avertir un conducteur d'un véhicule automobile selon l'une des revendications 1 à 8, **caractérisé en ce que** la détermination du retard du signal d'avertissement (5) à l'aide de l'au moins un paramètre relatif au sens de déplacement au moyen d'un algorithme de décision ou d'un tableau peut traiter simultanément plusieurs paramètres relatifs au sens de déplacement.

10. Système d'avertissement d'angle mort pour véhicules automobiles (1), comprenant
- un système de détection qui comprend au moins un premier capteur sur le côté extérieur du véhicule automobile (1) et qui est associé à un côté du véhicule automobile (1) afin de surveiller une zone de forme angulaire (4) à l'extérieur du véhicule automobile (1) et détecter l'intrusion d'objets dans la zone de forme angulaire (4),
- une unité de commande destinée à acquérir et à retransmettre un paramètre relatif au sens de déplacement du véhicule automobile (1),
- des moyens pour déterminer s'il y a présence d'une situation de trafic imposant un signal d'avertissement immédiat, au moyen d'un algorithme de décision qui traite l'au moins un paramètre relatif au sens de déplacement en tant qu'entrée,
- une unité d'avertissement destinée à délivrer un avertissement visuel et/ou sonore,
**caractérisé en ce que**
- l'unité d'avertissement est configurée pour déclencher un signal d'avertissement (5) immédiat lorsqu'il y a présence d'une situation de trafic imposant un signal d'avertissement (5) immédiat et, le cas contraire, pour déterminer une durée de retard (10) adaptée à la situation de trafic et déclencher le signal d'avertissement (5) avec la durée de retard (10) déterminée lorsqu'il n'y a présence d'aucune situation de trafic imposant un signal d'avertissement (5) immédiat.
